# EUROPEAN PATENT APPLICATION

(11) **EP 2 492 538 A1**
(43) Date of publication of application: **29.08.2012**
(21) Application number: 10824751.1
(22) Date of filing: 17.09.2010
(51) Int. Cl.: F16F 15/02, B32B 7/02, B32B 27/00, E04B 1/98, E04F 15/18

(54) **VIBRATION DAMPING SHEET, METHOD FOR DAMPING VIBRATION OF VIBRATING MEMBER, AND METHOD FOR UTILIZING THE VIBRATING MEMBER**

(30) Priority: 20.10.2009 JP 2009241791
(71) Applicant: Nitto Denko Corporation, Osaka 567-8680 (JP)
(72) Inventor: KAWAGUCHI, Yasuhiko, Ibaraki-shi Osaka 567-8680 (JP)
(74) Representative: Schwabe - Sandmair - Marx
(86) International application number: PCT/JP2010/066151
(87) International publication number: WO 2011/048900

(57) **Abstract**

A vibration-damping sheet includes a resin layer formed from a plurality of resin compositions having different glass transition temperatures; and a constraining layer laminated on the resin layer.

## Description

### TECHNICAL FIELD

The present invention relates to a vibration-damping sheet, a method for damping vibration of a vibrating member, and a method for use thereof.

### BACKGROUND ART

Conventionally, various components used in the field of automobiles, railroad cars, home electric appliances, office equipment, household equipment, or working machinery easily cause vibrating sounds during its operation. Therefore, it has been known that, for example, by bonding a vibration-damping sheet including a resin layer to the component to prevent generation of the vibrating sounds, vibration-damping characteristics for the component are improved.

For example, Patent Document 1 below has proposed a vibration-damping sheet composed of a vibration-damping material for high temperature containing butyl rubber to achieve excellent vibration-damping properties under a temperature of about 40°C.

### Citation List

### Patent Document

Patent Document 1
   Japanese Unexamined Patent Publication No. H9-136998

### SUMMARY OF THE INVENTION

### PROBLEM TO BE SOLVED BY THE INVENTION

In Patent Document 1 above, vibration-damping characteristics of a vibration-damping sheet under a normal temperature (about 20°C) and under a temperature of about 40°C are evaluated.

Meanwhile, there is a demand for improvement in vibration-damping characteristics for components used under a wider temperature range, for example, cooling components such as water-cooling component or air-cooling component, and further cooling components immediately after termination of operation at high load.

However, with the vibration-damping sheet of Patent Document 1, sufficient improvement in vibration-damping characteristics for components under a wide temperature range may sometimes be difficult.

An object of the present invention is to provide a vibration-damping sheet having more improved vibration-damping characteristics under a wide temperature range, particularly at a temperature of 30 to 180°C; a method for damping vibration of a vibrating member ; and a method for use thereof.

### MEANS FOR SOLVING THE PROBLEM

A vibration-damping sheet of the present invention includes a resin layer formed from a plurality of resin compositions having different glass transition temperatures; and a constraining layer laminated on the resin layer.

In the vibration-damping sheet of the present invention, it is preferable that each of the resin compositions has a glass transition temperature of 20 to 180°C, and it is preferable that each of the resin compositions has a glass transition temperature of 60 to 180°C.

In the vibration-damping sheet of the present invention, it is preferable that at least one of the resin compositions contains a thermosetting resin, and it is preferable that at least one of the resin compositions contains a thermoplastic resin.

In the vibration-damping sheet of the present invention, it is preferable that the resin layer includes a plurality of monolayer resin layers that are laminated, and the resin compositions that form the respective monolayer resin layers have glass transition temperatures that are different from each other.

In the vibration-damping sheet of the present invention, it is preferable that the resin layer includes at least one monolayer resin layer; the monolayer resin layer has a two-phase structure formed from a continuous phase and a dispersed phase dispersed in the continuous phase; and the glass transition temperature of the resin composition that forms the continuous phase and the glass transition temperature of the resin composition that forms the dispersed phase are different from each other.

In a method for damping vibration of a vibrating member of the present invention, the above-described vibration-damping sheet is bonded to a vibrating member.

In a method for using a vibrating member of the present invention, the above-described vibrating member to which a vibration-damping sheet is bonded is used in the range of 30 to 180°C, and the above-described vibrating member to which a vibration-damping sheet is bonded is used in the range of 60 to 180°C.

### EFFECT OF THE INVENTION

A vibration-damping sheet of the present invention includes a resin layer formed from a plurality of resin compositions having glass transition temperatures that are different from each other, and therefore has improved vibration-damping characteristics under a wide temperature range.

Thus, with a method for damping vibration of a vibrating member, in which the vibration-damping sheet of the present invention is bonded to a vibrating member, even if the vibrating member is used under a wide temperature range, for example, under a temperature of 30 to 180°C, sufficient vibration damping can be achieved.

### BRIEF DESCRIPTION OF THE DRAWINGS

[FIG. 1] FIG. 1 is a diagram illustrating a method for bonding a vibration-damping sheet in one embodiment (embodiment in which a resin layer is composed of a first layer and a second layer that are laminated) of the present invention to a vibrating member,
   (a) illustrating a step of preparing a vibration-damping sheet, and releasing a releasing paper; and
   (b) illustrating a step of bonding the vibration-damping sheet to the vibrating member.
[FIG. 2] FIG. 2 is a diagram illustrating a vibration-damping sheet in another embodiment (embodiment in which the resin layer is composed of a first layer, a second layer, and a third layer that are laminated) of the present invention.
[FIG. 3] FIG. 3 is a diagram illustrating a vibration-damping sheet in another embodiment (embodiment in which the resin layer has a two-phase structure) of the present invention.

### EMBODIMENT OF THE INVENTION

A vibration-damping sheet of the present invention includes a resin layer, and a constraining layer laminated on the resin layer.

The resin layer is formed from a plurality of resin compositions, and examples of resin compositions include a thermosetting resin composition and a thermoplastic resin composition.

The thermosetting resin composition contains a thermosetting resin as a main component, and examples of thermosetting resins include epoxy resin, urethane resin, phenolic resin, and urea resin. Preferably, epoxy resin is used in view of workability, storage stability, etc.

Curing reaction of these thermosetting resins are not caused before use, i.e., before heating after forming a vibration-damping material and bonding the vibration-damping material to the vibrating member; but these thermosetting resins are cured by heating when in use, so that a desired glass transition temperature is given.

Examples of epoxy resins include aromatic epoxy resins such as bisphenol epoxy resins (e.g., bisphenol A epoxy resin, bisphenol F epoxy resin, bisphenol S epoxy resin, hydrogenated bisphenol A epoxy resin, dimer-acid-modified bisphenol epoxy resin, etc.), dimer acid diglycidyl ester epoxy resin, polypropylene glycol diglycidyl epoxy resin, novolak epoxy resin (e.g., phenol novolak epoxy resin, cresol novolak epoxy resin, biphenyl epoxy resin, etc.), and naphthalene epoxy resin; nitrogen-containing-cyclic epoxy resins such as triepoxypropyl isocyanurate (triglycidyl isocyanurate), and hydantoin epoxy resins; glycidyl ether epoxy resins; and glycidyl amine epoxy resins.

The epoxy resin is liquid or solid at normal temperature, and has an epoxy equivalent of, for example, 100 to 750 g/eq., preferably 150 to 500 g/eq.

The epoxy resin can be blended with a curing agent and a curing accelerator.

Examples of curing agents include amide compounds such as dicyandiamide (DCDA); amine compounds such as polyamine; imidazole compounds such as imidazole; and isocyanate compounds. These curing agents can be used alone, or can be used in combination of two or more. Preferably, amide compounds, or imidazole compounds are used.

The mixing ratio of the curing agent is, for example, a ratio that allows the reactive group (e.g., amino group) in the curing agent and the epoxy group in the epoxy resin to be equimolar amounts. To be specific, the mixing ratio of the curing agent is 1 to 15 parts by weight, preferably 1.2 to 7.0 parts by weight relative to 100 parts by weight of the epoxy resin. The curing agent can be used singly, or can be used in combination.

The curing accelerator is used in combination with a curing agent. Examples of curing accelerators include urea compounds (3-(3,4-dichlorophenyl)-1,1-dimethylurea: DCMU), tertiary amine compounds, and phosphorus compounds. Preferably, urea compounds are used.

The mixing ratio of the curing accelerator relative to 100 parts by weight of the epoxy resin is, for example, 0.5 to 2 parts by weight. The curing accelerator can be used singly, or can be used in combination.

The urethane resin is obtained by the reaction of isocyanate and a hydroxyl group-containing compound, and examples of isocyanates include aromatic diisocyanates such as tolylene diisocyanate (TDI), diphenylmethane diisocyanate (MDI), and derivatives thereof. Examples of hydroxyl group-containing compounds include polyols such as polypropylene glycol and polyethylene glycol.

Phenolic resins are obtained by the addition-condensation reaction of phenol and formaldehyde, and examples thereof include, to be specific, novolak phenolic resin and resol phenol.

The urea resin is obtained by the condensation reaction of urea and formaldehyde.

These thermosetting resins can be used singly, or can be used in combination of two or more. Preferably, the epoxy resin is used singly, or different kinds of epoxy resins are used in combination.

As the thermosetting resin, when different kinds of epoxy resins are used in combination, to be more specific, a combination of an epoxy resin (high temperature-side resin) having a glass transition temperature of more than 100°C after curing to be described later, and an epoxy resin (low temperature-side resin) having a glass transition temperature of below 60°C after curing is used.

Preferably, the high temperature-side resin is a mixture (having a glass transition temperature of 130°C after curing) of bisphenol A epoxy resin and an amide compound, and a low temperature-side resin is a mixture (having a glass transition temperature of -20°C after curing) of dimer-acid-modified bisphenol epoxy resin and an amide compound. By blending such a high temperature-side resin and a low temperature-side resin at a mixing ratio to be described later, the glass transition temperature of the resin layer after curing to be described later can be set to a desired range.

The mixing ratio is, in a weight ratio of the high temperature-side resin to the low temperature-side resin, for example, 10/90 to 90/10, preferably 20/80 to 80/20.

The glass transition temperature after curing of such a thermosetting resin is, for example, -20°C to 180°C, preferably 20 to 180°C, more preferably 60 to 100°C, or 140 to 180°C.

The mixing ratio of the thermosetting resin relative to 100 parts by weight of the thermosetting resin composition is, for example, 100 parts by weight or less, preferably 90 parts by weight or less, more preferably 70 parts by weight or less, and usually 50 parts by weight or more.

The thermosetting resin composition can also contain, for example, known additives such as a filler, and furthermore, a thixotropic agent, a lubricant, a pigment, an antiscorch agent, a stabilizer, a softener, a plasticizer, an age resister, an antioxidant, an ultraviolet absorber, a coloring agent, an antifungal agent, a fire retardant, and a tackifier (e.g., petroleum resin) at an appropriate ratio.

A filler is blended as necessary in view of reinforcement and handleability, and examples of fillers include calcium carbonate (e.g., calcium carbonate heavy, calcium carbonate light, Hakuenka), talc, mica, clay, mica powder, bentonite (including Organite), silica, alumina, aluminum silicate, titanium oxide, carbon black, acetylene black, glass powder, boron nitride, and metal powder (including aluminum powder). These fillers can be used singly, or can be used in combination.

The mixing ratio of the filler relative to 100 parts by weight of the thermosetting resin is, for example, 10 to 150 parts by weight, preferably 25 to 100 parts by weight.

The thermoplastic resin composition contains, for example, a thermoplastic resin as a main component. The thermoplastic resin is, for example, a rubber thermoplastic resin, and for example, a homopolymer composed of a single monomer and/or a copolymer composed of a plurality of monomers. To be specific, examples of homopolymers include polymethyl methacrylate (PMMA), polystyrene (PSt), polyvinyl chloride (PVC), polyacrylonitrile (PAN), and polyphenylene sulfide (PPS); and examples of copolymers include acrylonitrile-butadiene-styrene copolymer (ABS) resin and polycarbonate (PC). Of these thermoplastic resins, preferably, noncrystalline thermoplastic resins are used.

Such a thermoplastic resin has a glass transition temperature of, for example, 40 to 180°C, preferably 60 to 100°C, or 140 to 180°C.

The mixing ratio of the thermoplastic resin relative to 100 parts by weight of the thermoplastic resin composition is, for example, 100 parts by weight or less, preferably 90 parts by weight or less, more preferably 70 parts by weight or less, and usually 50 parts by weight or more.

Examples of the thermoplastic resin composition also include rubber compositions.

The rubber composition contains rubber as a main component, and examples of rubber include styrene-butadiene rubber (SBR: for example, styrene-butadiene random copolymers, styrene-butadiene-styrene block copolymers, styrene-ethylene-butadiene copolymers, styrene-ethylene-butadiene-styrene block copolymers, etc.), styrene-isoprene rubber (e.g., styrene-isoprene-styrene block copolymer, etc.), styrene-isoprene-butadiene rubber, polybutadiene rubber (e.g., 1,4-polybutadiene rubber, syndiotactic-1,2-polybutadiene rubber, acrylonitrile-butadiene rubber, etc.), polyisobutylene rubber, polyisoprene rubber, chloroprene rubber, isobutylene-isoprene rubber, nitrile rubber, butyl rubber, nitrile butyl rubber, acrylic rubber, reclaimed rubber, and natural rubber.

These rubbers can be used alone or in combination of two or more.

Of these rubbers, preferably, styrene-butadiene rubber is used.

The styrene-butadiene rubber has a Mooney viscosity (JIS K6300-1 (2001)) of, for example, 10 to 100 (ML1+4, at 100°C) or more, preferably 20 to 70 (ML1+4, at 100°C).

Such a rubber has a glass transition temperature of, for example, -80 to 40°C.

The mixing ratio of the rubber relative to 100 parts by weight of the rubber composition is, for example, 100 parts by weight or less, preferably 90 parts by weight or less, more preferably 70 parts by weight or less, and usually 50 parts by weight or more.

The rubber composition can contain, for example, the above-described additives, preferably a tackifier at an appropriate proportion.

The tackifier has a glass transition temperature of, for example, 60 to 160°C, preferably 80 to 140°C. The tackifier has a softening temperature of, for example, 50 to 200°C, preferably 60 to 150°C.

By adding such a tackifier to the rubber composition, the glass transition temperature of the rubber composition can be set to, for example, 20°C or more. That is, even when the rubber has an extremely low glass transition temperature, by blending a tackifier, the glass transition temperature of the rubber composition can be set to the above-described temperature.

The mixing ratio of the tackifier relative to 100 parts by weight of the rubber is, for example, 10 to 200 parts by weight, preferably 30 to 150 parts by weight.

The thermoplastic resin composition can contain the above-described additive at an appropriate proportion.

In the present invention, for the resin composition, for example, a combination of the above-described thermosetting resin composition and the thermoplastic resin composition is used; or, for example, different kinds of the same composition are used (to be specific, different kinds of the thermosetting resin compositions, or different kinds of the thermoplastic resin compositions) in combination.

The above-described resin compositions are prepared, for example, by kneading the above-described components at the above-described mixing ratio, using, for example, a mixing roll, a pressure kneader, or an extruder.

The thus obtained resin compositions have glass transition temperatures that are different from each other, and such glass transition temperatures are in the range of -20°C to 180°C, preferably in the range of 20 to 180°C, more preferably in the range of 60 to 180°C.

To be specific, the difference in the glass transition temperature of the resin compositions is, for example, more than 0°C and 150°C or less, preferably 20°C or more and 100°C or less, and more preferably 50°C or more and 75°C or less.

To be more specific, examples of the resin composition include a combination of a resin composition having a glass transition temperature of -20°C or more and below 100°C, and a resin composition having a glass transition temperature of 100°C or more and 180°C or less; and for example, a combination of a resin composition having a glass transition temperature of -20°C or more and below 60°C, a resin composition having a glass transition temperature of 60°C or more and 100°C or less, and a resin composition having a glass transition temperature of 140°C or more and 180°C or less.

Preferably, a combination of a resin composition having a glass transition temperature of 0°C or more and 95°C or less, and a resin composition having a glass transition temperature of 110°C or more and 170°C or less is used; preferably, a combination of a resin composition having a glass transition temperature of -20°C or more and 50°C or less, a resin composition having a glass transition temperature of 70°C or more and 95°C or less, and a resin composition having a glass transition temperature of 145°C or more and 170°C or less is used.

The resin compositions are suitably selected so that the glass transition temperatures are in the above-described desired range.

The above-described glass transition temperature of the resin compositions is measured in conformity with the heat flux differential scanning calorimetry (heat flux DSC) of JIS K7121-1987.

The prepared resin compositions are formed, for example, into a sheet by a molding method such as calendering, extrusion molding, or press molding at a predetermined temperature.

The molding temperature of the resin composition is, for example, when the resin composition contains a thermosetting resin composition as a main component, a temperature that does not cause the thermosetting resin composition to be cured, to be specific, for example, a room temperature (25°C) to 100°C. The molding temperature of the resin composition is, for example, when the resin composition contains a thermoplastic resin composition as a main component, a temperature near the melting point of the thermoplastic resin composition, to be specific, for example, 250°C or less, preferably 100 to 150°C, and preferably 150 to 250°C.

Alternatively, as necessary, the prepared resin compositions can be ground to be formed into microparticles. The microparticles have an average particle size of, for example, 1 to 200 µm, preferably 10 to 100 µm.

The constraining layer constrains the resin layer, and attempts to improve vibration-damping characteristics and workability. The constraining layer is in sheet form, light and thin, and formed from a material that allows close contact and integration with the resin layer.

### Examples of such materials include glass fiber cloth, metal foil, fabric, and carbon fiber.

Glass fiber cloth is glass fiber made into fabric, and a known glass fiber cloth is used. Examples of glass fiber cloth include resin-impregnated glass fiber cloth. The resin-impregnated glass fiber cloth is a glass fiber cloth as described above impregnated with synthetic resins such as a thermosetting resin or a thermoplastic resin, and a known resin-impregnated glass fiber cloth is used. Examples of thermosetting resins include epoxy resin, urethane resin, phenolic resin, melamine resin, and urea resin. Examples of thermoplastic resins include polyvinyl acetate, ethylene-vinyl acetate copolymer (EVA), polyvinyl chloride, and EVA-polyvinyl chloride copolymer. These thermosetting resins, and thermoplastic resins as described above can be used alone or in combination. Alternatively, a mixture of a thermosetting resin and a thermoplastic resin can also be used.

Examples of metal foils include known metal foils such as aluminum foil and steel foil.

Examples of fabrics include woven cloth and nonwoven fabric made of synthetic resin fiber or natural fiber.

Of these examples of the constraining layer, preferably, glass fiber cloth is used in view of weight, close contact, strength, and costs.

### <First Embodiment>

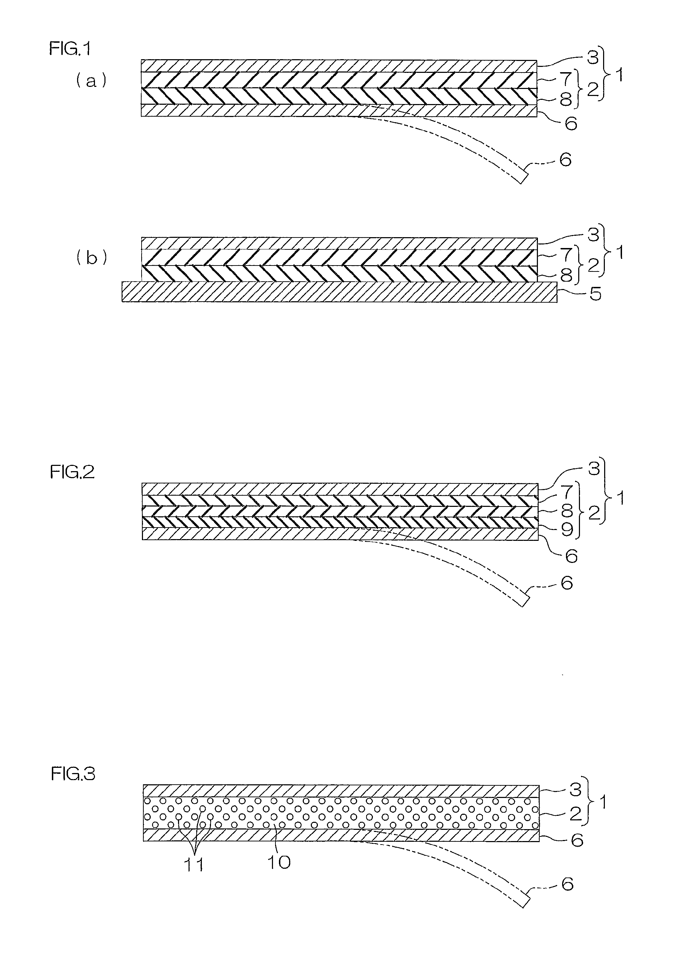

FIG. 1 is a diagram illustrating a method for bonding a vibration-damping sheet in one embodiment (embodiment in which a resin layer is composed of a first layer and a second layer that are laminated) of the present invention to a vibrating member.

In the following, a vibration-damping sheet in one embodiment (embodiment in which a resin layer is composed of a first layer and a second layer that are laminated) of the present invention is described with reference to FIG. 1.

In FIG. 1 (a), a vibration-damping sheet 1 includes a resin layer 2, and a constraining layer 3 laminated onto one side of the resin layer 2.

The resin layer 2 is composed of a plurality of monolayer resin layers 7 and 8 that are laminated, to be specific, the resin layer 2 includes a first layer 7 laminated on the constraining layer 3, and a second layer 8 laminated on the first layer 7.

The first layer 7 is formed into a sheet from the above-described thermosetting resin composition or thermoplastic resin composition.

The second layer 8 is made of the above-described thermosetting resin composition or thermoplastic resin composition, and is formed into a sheet from a resin composition having a glass transition temperature that is different from the glass transition temperature of the resin composition that forms the first layer 7.

The glass transition temperature of the resin composition that forms the second layer 8 is set, preferably, higher than the glass transition temperature of the resin composition that forms the first layer 7.

To form the first layer 7 and the second layer 8, the above-described resin compositions are formed into sheets by, for example, a molding method such as calendering, extrusion molding, or press molding at the above-described temperature.

The first layer 7 and the second layer 8 thus formed have a thickness of, for example, 0.1 to 2.0 mm, preferably 0.2 to 1.5 mm.

Then, by bringing the first layer 7 and the second layer 8 together, the resin layer 2 can be formed.

The resin layer 2 thus formed has a thickness of, for example, 0.2 to 5.0 mm, preferably 0.5 to 2.5 mm.

The constraining layer 3 has a thickness of, for example, 0.05 to 2.0 mm, preferably 0.1 to 0.5 mm.

The constraining layer 3 has a modulus of elasticity (tensile modulus) of, for example, 10⁷ Pa or more (10⁷ to 10¹¹ Pa or less), or below 10⁷ (10⁵ Pa or more and below 10⁷ Pa).

Then, the above-described resin layer 2 and the constraining layer 3 are brought together so that the first layer 7 and the constraining layer 3 are brought into contact with each other, thereby producing a vibration-damping sheet 1.

A separator (releasing paper) 6 can be bonded onto the surface of the resin layer 2 (second layer 8) of the obtained vibration-damping sheet 1 as necessary until actual use.

The vibration-damping sheet 1 can be cut into a suitable size in accordance with a size of a vibrating member 5, vibrations of which are to be damped, to be described later.

Next, a method of damping vibration with the vibration-damping sheet 1 is described.

To damp vibration of the vibrating member 5, the vibration-damping sheet 1 is bonded to the vibrating member 5.

Examples of the vibrating member 5 include water-cooling components or air-cooling components (cooling components) that are disposed near an engine compartment (engine room) of an engine that is operated at high load or low load; and cooling components that are disposed near a motor that is operated at high load or low load, condenser, or transformer. The vibrating member 5 has, for example, a temperature that is the same as the glass transition temperature of the resin compositions or a temperature higher than the glass transition temperature of the resin compositions by about 10 to 40°C, to be specific, a temperature of 30 to 180°C, 30 to 170°C, 60 to 180°C, or 90 to 170°C before, during, and after its operation (immediately after termination by the operator).

To bond the vibration-damping sheet 1 to the vibrating member 5, as shown by the phantom line in FIG. 1 (a), first, the releasing paper 6 is released from the surface of the resin layer 2 (second layer 8), and then, as shown in FIG. 1 (b), the surface of the resin layer 2 (second layer 8) is disposed on the surface of the vibrating member 5.

Thereafter, when the resin layer 2 mainly contains a thermosetting resin composition (to be specific, when the first layer 7 and the second layer 8 both contain the thermosetting resin composition), after bonding to the constraining layer 3, for example, by heating at 150 to 200°C, preferably at 160 to 190°C, for example, for 1 to 90 min, preferably for 10 to 60 min, the resin layer 2 (at least the first layer 7) is cured.

By thus curing the resin layer 2, the resin layer 2 is given the above-described desired glass transition temperature.

When the resin layer 2 mainly contains a thermoplastic resin composition (preferably, when the first layer 7 and the second layer 8 both contain a thermoplastic resin composition), at the time of disposing onto the vibrating member 5, for example, the resin layer 2 is bonded to the vibrating member 5 by thermocompression bonding at the above-described temperature near the melting point of the thermoplastic resin composition, that is, at 150 to 250°C. In this manner, the resin layer 2 is allowed to adhere (thermal fusion bonded) to the vibrating member 5, and to damp vibration of the vibrating member 5.

The vibrations of the vibrating member 5 are damped in this manner.

The vibration-damping sheet 1 includes a resin layer 2 composed of laminated monolayer resin layers 7 and 8 formed from two resin compositions having glass transition temperatures that are different from each other, and therefore vibration-damping characteristics at around their glass transition temperatures, i.e., under a wide temperature range, are improved.

Thus, with the method for damping vibration of the vibrating member 5 by bonding the vibration-damping sheet 1 to the vibrating member 5, even if the vibrating member 5 is used under a wide temperature range as described above, sufficient vibration damping can be achieved.

FIG. 2 is a diagram illustrating a vibration-damping sheet (embodiment in which the resin layer is composed of a first layer, a second layer, and a third layer that are laminated) in another embodiment of the present invention. In the following figures, the same reference numerals are given to the members corresponding to the above-described components, and detailed descriptions thereof are omitted.

In the above description with reference to FIG. 1, the resin layer 2 is formed by laminating two monolayer resin layers 7 and 8 (first layer 7 and second layer 8), but the number of the monolayer resin layer is not particularly limited, and for example, as shown in FIG. 2, the resin layer 2 can also be formed by laminating three monolayer resin layers 7, 8, and 9.

In FIG. 2, the resin layer 2 includes a first layer 7, a second layer 8, and a third layer 9.

The third layer 9 is laminated to the second layer 8, and as necessary, a separator 6 is bonded to the surface of the third layer 9.

The third layer 9 is made of the above-described thermosetting resin composition or thermoplastic resin composition, and is formed into a sheet from a resin composition having a glass transition temperature that is different from the glass transition temperature of the resin composition that forms the first layer 7 and of the resin composition that forms the second layer 8.

The glass transition temperature of the resin composition that forms the third layer 9 is set, preferably, higher than the glass transition temperature of the resin composition that forms the second layer 9.

The third layer 9 has a thickness of, for example, 0.1 to 2.0 mm, preferably 0.2 to 1.5 mm.

The vibration-damping sheet 1 includes a resin layer 2 composed of laminated monolayer resin layers 7, 8, and 9 formed from three resin compositions having glass transition temperatures that are different from each other, and therefore vibration-damping characteristics at around their glass transition temperatures, i.e., under a wider temperature range, are improved.

Thus, even if the vibrating member 5 is used under a wider temperature range, sufficient vibration damping can be achieved.

### <Second Embodiment>

FIG. 3 is a diagram illustrating a vibration-damping sheet in another embodiment (embodiment in which the resin layer has a two-phase structure) of the present invention.

In FIG. 3, the resin layer 2 is a single monolayer resin layer, and this monolayer resin layer has a two-phase structure. The two-phase structure is formed from a continuous phase 10, and a dispersed phase 11 that is dispersed in the continuous phase.

The resin composition that forms the continuous phase 10 and the resin composition that forms the dispersed phase 11 have glass transition temperatures that are different from each other.

Examples of the resin composition that forms the continuous phase 10 include, preferably, the above-described thermoplastic resin compositions.

Examples of the resin composition that forms the dispersed phase 11 include, preferably, the above-described thermosetting resin compositions.

The difference between the glass transition temperature of the resin composition that forms the continuous phase 10, and the glass transition temperature of the resin composition that forms the dispersed phase 11 is, for example, more than 0°C and 150°C or less, preferably 20°C or more and 100°C or less, more preferably 50°C or more and 75°C or less.

The glass transition temperature of the resin composition that forms the continuous phase 10 is set, preferably, higher than the glass transition temperature of the resin composition that forms the dispersed phase 11.

To form the resin layer 2, first, the resin composition that forms the dispersed phase 11 is formed into microparticles in advance as described above; the microparticles are blended with the resin composition that forms the continuous phase 10; and the mixture is stirred (kneaded) homogeneously while heating.

Thereafter, as necessary, when the resin composition that forms the dispersed phase 11 and/or the continuous phase 10 is a thermosetting resin composition, the thermosetting resin is cured by heating at, for example, 150 to 200°C, preferably 160 to 190°C, for, for example, 1 to 90 minutes, preferably 10 to 60 minutes.

On the other hand, when the resin composition that forms the dispersed phase 11 and/or the continuous phase 10 is a thermoplastic resin, when disposing onto the vibrating member 5, the resin layer 2 is thermocompression bonded to the vibrating member 5 at a temperature around, for example, the above-described melting point of the thermoplastic resin.

The thus obtained resin layer 2 has a thickness of, for example, 0.2 to 5.0 mm, preferably 0.5 to 2.5 mm.

The vibration-damping sheet 1 includes the resin layer 2 having a two-phase structure formed from resin compositions having different glass transition temperatures, and therefore the resin layer 2 can be formed easily.

### <Third Embodiment>

Although not shown, any of the monolayer resin layers (first layer 7, second layer 8, and third layer 9) shown in FIG. 1 or FIG. 2 of the first embodiment can also be replaced with the monolayer resin layer 2 having the two-phase structure formed from resin compositions having different glass transition temperatures shown in FIG. 3 of the second embodiment.

### EXAMPLES

### Production Examples 1 to 5

Epoxy resin compositions A to C, and rubber compositions A and B were prepared in accordance with the mixing formulation shown in Table 1, by blending the components by parts by weight basis, and kneading the mixture with a mixing roll.

### Example 1

The epoxy resin composition A was press molded at 100°C to be formed into a sheet, thereby forming a first layer having a thickness of 1 mm, and the epoxy resin composition B was press molded at 100°C to be formed into a sheet, thereby forming a second layer having a thickness of 1 mm.

Then, the first layer and the second layer were brought together, thereby forming a resin layer. Thereafter, a glass fiber cloth (Tensile Modulus: 10¹⁰ Pa, calculated from initial gradient of the stress-strain curve obtained at the time of measurement based on the tensile strength of JIS R 3420. The same applies to the following.) having a thickness of 0.2 mm was brought together with the resin layer (first layer), and thereafter cut out into a size of 50 × 100 mm, thereby producing a vibration-damping sheet.

### Example 2

The epoxy resin composition A was press molded at 100°C to be formed into a sheet, thereby forming a first layer having a thickness of 1 mm, and polycarbonate was press molded at 250°C to be formed into a sheet, thereby forming a second layer having a thickness of 1 mm.

Then, the first layer and the second layer were brought together, thereby forming a resin layer. Thereafter, a glass fiber cloth having a thickness of 0.2 mm was brought together with the resin layer (first layer), and thereafter cut out into a size of 50 × 100 mm, thereby producing a vibration-damping sheet.

### Example 3

Polymethyl methacrylate was press molded at 200°C to be formed into a sheet, thereby forming a first layer having a thickness of 1 mm, and the epoxy resin composition B was press molded at 100°C to be formed into a sheet, thereby forming a second layer having a thickness of 1 mm.

Then, the first layer and the second layer were brought together, thereby forming a resin layer. Thereafter, a glass fiber cloth having a thickness of 0.2 mm was brought together with the resin layer (first layer), and thereafter cut out into a size of 50 × 100 mm, thereby producing a vibration-damping sheet.

### Example 4

Polymethyl methacrylate was press molded at 200°C to be formed into a sheet, thereby forming a first layer having a thickness of 1 mm, and polycarbonate was press molded at 250°C to be formed into a sheet, thereby forming a second layer having a thickness of 1 mm.

Then, the first layer and the second layer were brought together, thereby forming a resin layer. Thereafter, a glass fiber cloth having a thickness of 0.2 mm was brought together with the resin layer (first layer), and thereafter cut out into a size of 50 × 100 mm, thereby producing a vibration-damping sheet.

### Example 5

The rubber composition A was press molded at 100°C to be formed into a sheet, thereby forming a first layer having a thickness of 1 mm, and polymethyl methacrylate was press molded at 200°C to be formed into a sheet, thereby forming a second layer having a thickness of 1 mm. Then, polycarbonate was press molded at 250°C to be formed into a sheet, thereby producing a third layer having a thickness of 1 mm.

Then, the first layer, the second layer, and the third layer were sequentially brought together, thereby producing a resin layer. Thereafter, a glass fiber cloth having a thickness of 0.2 mm was brought together with the resin layer (first layer), and thereafter cut out into a size of 50 × 100 mm, thereby producing a vibration-damping sheet.

### Example 6

50 parts by weight of microparticles (average particle size 50 µm) of polymethyl methacrylate were prepared, and blended with 50 parts of the epoxy resin composition C. The mixture was kneaded homogeneously while heating to 80°C, thereby preparing a resin composition. Thereafter, the resin composition was press molded at 100°C to be formed into a sheet, thereby producing a monolayer resin layer (two-phase structure: dispersed phase/continuous phase = polymethyl methacrylate microparticles/epoxy resin composition C) having a thickness of 2 mm.

Then, thereafter, a glass fiber cloth having a thickness of 0.2 mm was brought together with the monolayer resin layer, and thereafter, cut out into a size of 50 × 100 mm, thereby producing a vibration-damping sheet.

### Comparative Example 1

The rubber composition B was press molded at 100°C to be formed into a sheet, thereby producing a resin layer having a thickness of 2.2 mm.

Then, a glass fiber cloth having a thickness of 0.2 mm was brought together with the resin layer, and thereafter, cut out into a size of 50 × 100 mm, thereby producing a vibration-damping sheet.

The resin layers and their mixing formulations in Examples and Comparative Examples are shown in Table 1 and Table 2.

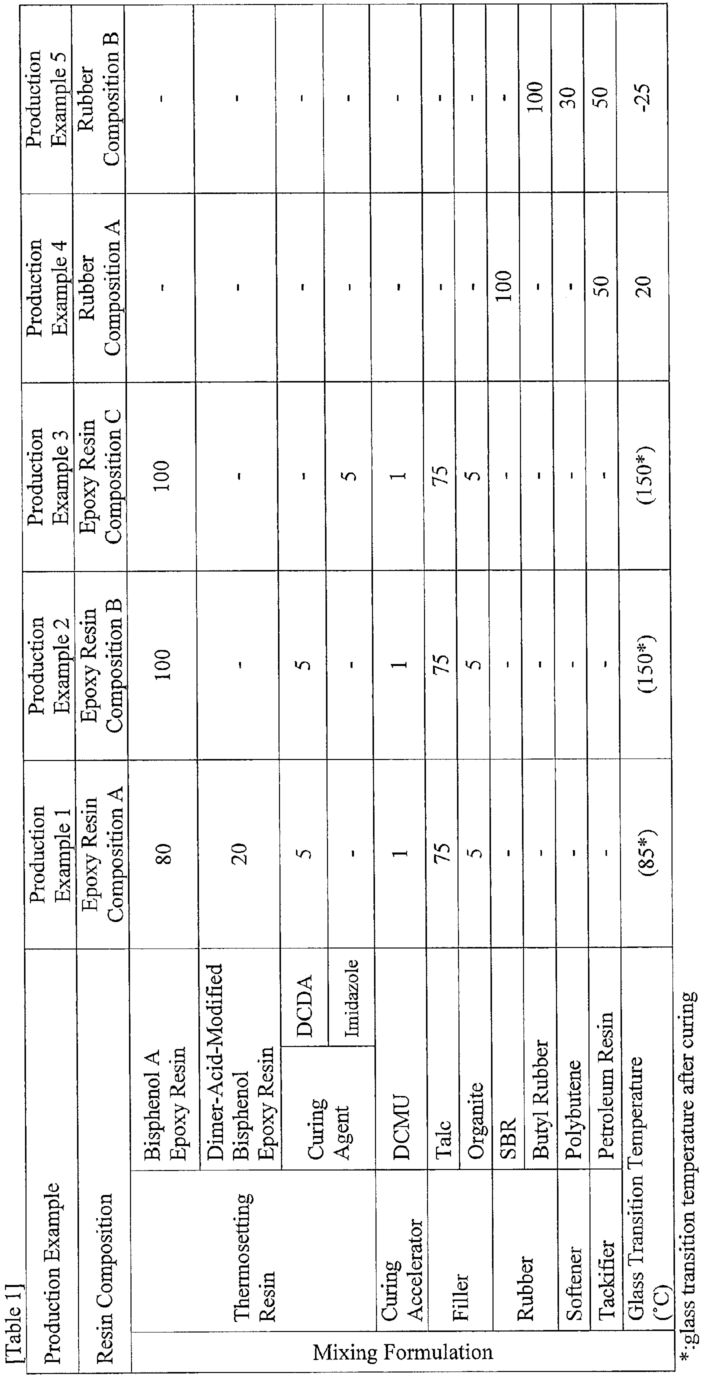

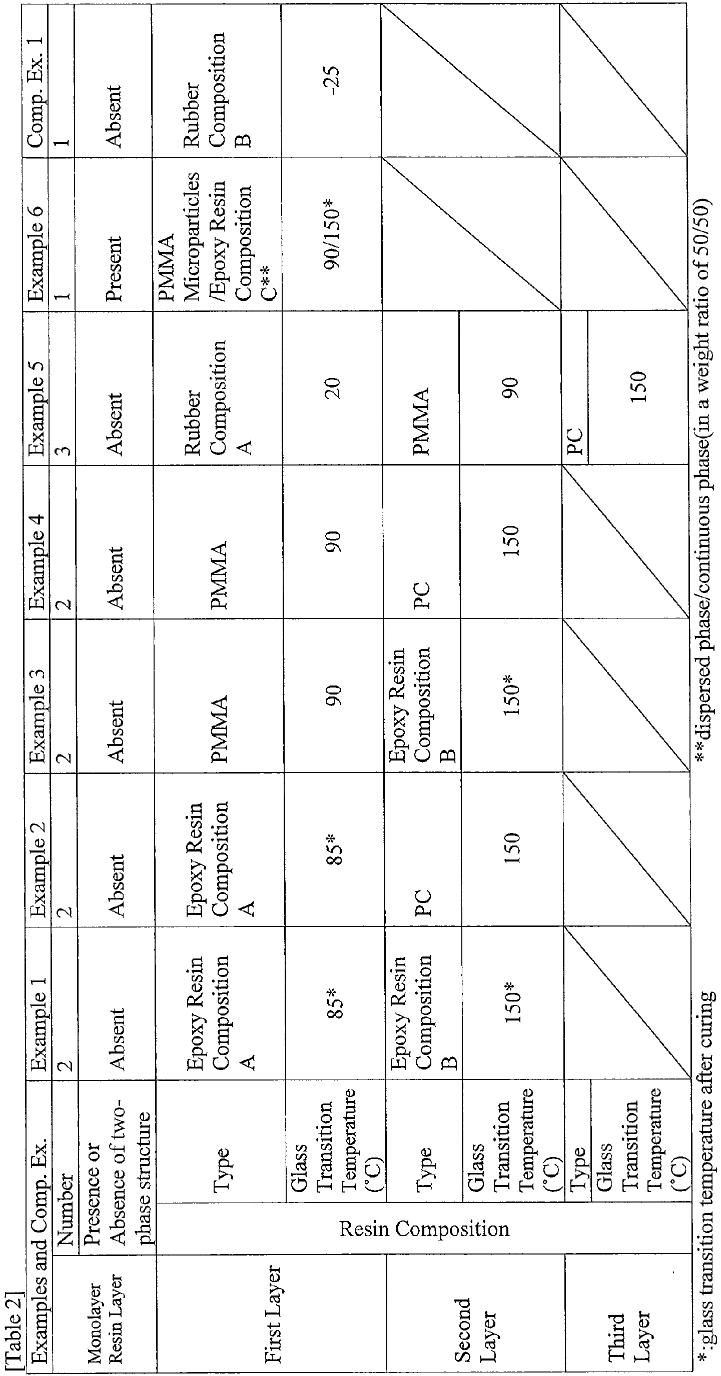

Details of components and their abbreviations in Tables 1 and 2 are shown below. Bisphenol A epoxy resin: trade name "jER828", viscosity (25°C) 12 to 15 Pa · s, epoxy equivalent 184 to 194 g/eq., manufactured by Japan Epoxy Resins Co., Ltd.
Dimer acid-modified epoxy resin: trade name "jER871", viscosity (25°C) 0.4 to 0.9 Pa · s, epoxy equivalent 390 to 470g/eq., manufactured by Japan Epoxy Resins Co., Ltd.
DCDA: dicyandiamide, manufactured by CVC
DCMU: trade name "DCMU99", 3-(3,4-dichlorophenyl)-1,1-dimethylurea, manufactured by Hodogaya Chemical Co., Ltd.
SBR: trade name "ASAPRENE 303", Mooney viscosity (JIS K6300-1 (2001)) 45, glass transition temperature:-78°C, manufactured by Asahi Kasei Corporation Butyl Rubber: trade name "butyl 268", glass transition temperature-75 to -67°C, manufactured by JSR CORPORATION
Polybutene: HV-303, manufactured by Nippon Oil Corporation
Petroleum Resin: Escorez 1202, manufactured by ExxonMobil, softening temperature 115°C PMMA: polymethyl methacrylate, microparticles, average particle size 50 µm
PC: polycarbonate

### Evaluation

### (1) Glass Transition Temperature

First, the epoxy resin compositions A to C were cured by heating at 180°C for 30 minutes.

Thereafter, the glass transition temperatures of the epoxy resin compositions A to C, the rubber compositions A and B, polymethyl methacrylate, and polycarbonate were measured in conformity with the heat flux differential scanning calorimetry (heat flux DSC) of JIS K7121-1987. The results are shown in Tables 1 and 2.

Details of the measuring apparatus and the measuring conditions are shown below.

### Measuring Apparatus: TA instrument DSC Q-2000

### Measuring Conditions: temperature rising speed 10°C/min

### (2) Vibration-Damping Characteristics

The vibration-damping sheets of Examples 1 to 6 and Comparative Example 1 were bonded to the center portion of a steel plate having a size of 100 × 250 mm and a thickness of 0.8 mm. The vibration-damping sheets of Examples 2, 4 to 7 and Comparative Example 1 were thermocompression bond at 250°C, thereby allowing the resin layer to adhere (thermal fusion bonded) to the steel plate.

For Examples 1 to 3, and 6, the steel plate to which the vibration-damping sheet was bonded was heated at 180°C for 30 minutes, thereby curing the epoxy resin composition.

Thereafter, the steel plate to which the vibration-damping sheet of Examples 1 to 6 and Comparative Example 1 was bonded was put into a dryer having the predetermined temperature shown in Table 3. Thereafter, after 30 minutes had elapsed, the steel plate was taken out from the dryer, and immediately thereafter, the steel plate was struck with a hammer, and vibration-damping characteristics were evaluated by auditory sense based on the following standards.

The steel plate with no vibration-damping sheet bonded thereto was struck with a hammer, and used as reference to the above-described vibration-damping characteristics evaluation.

The results are shown in Table 3.

Good: It was confirmed that the hammer sound decreased significantly compared with that of the reference steel plate.

Average: It was confirmed that the hammer sound decreased slightly compared with that of the reference steel plate.

Poor: It was confirmed that the hammer sound was not reduced in comparison with the hammer sound of the reference steel plate, and the sound was the same as in the case with the reference steel plate.

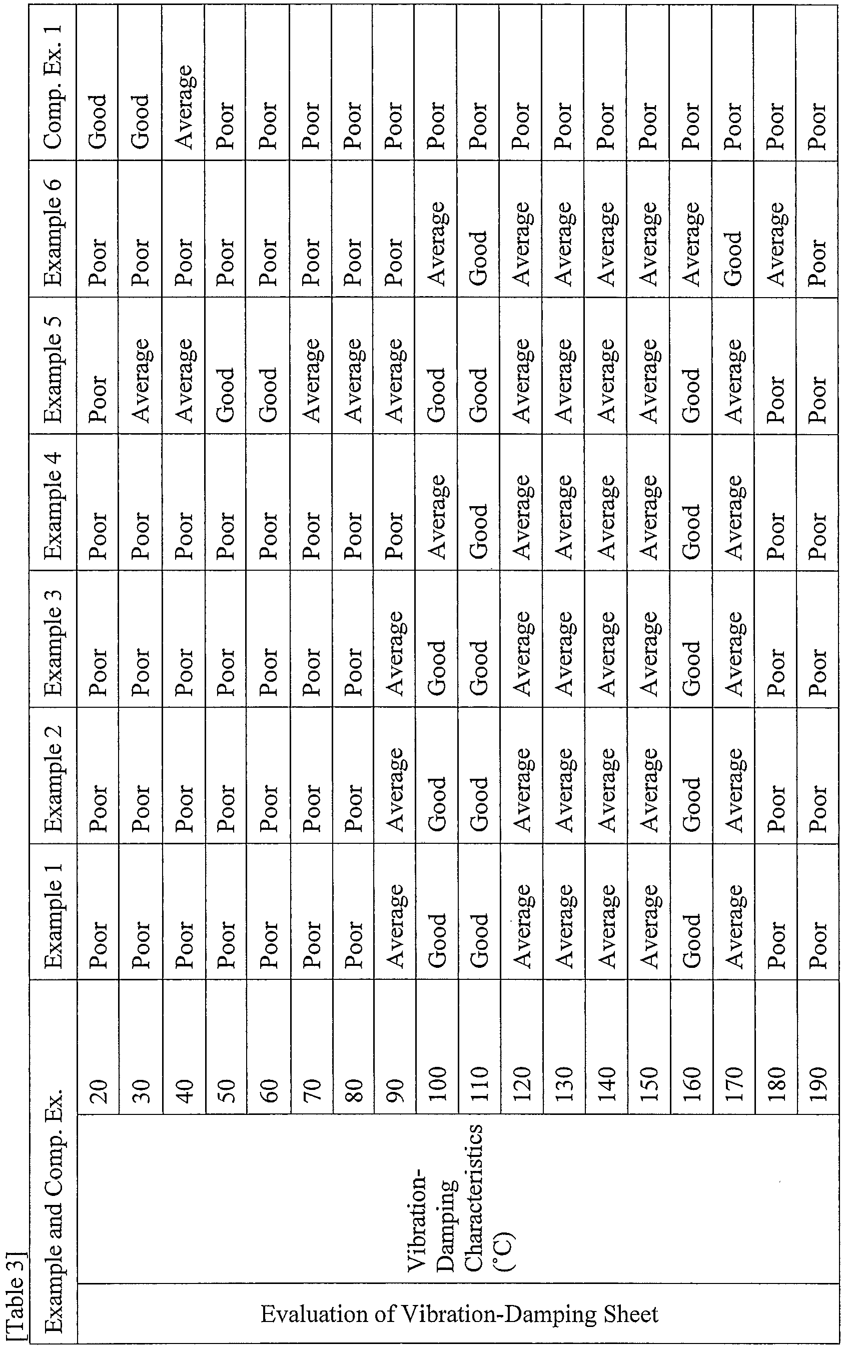

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

A vibration-damping sheet of the present invention, a method for damping vibration of a vibrating member, and a method for use thereof are applied for components used under a wide temperature range such as various cooling components.

## Claims

1. A vibration-damping sheet comprising:
a resin layer formed from a plurality of resin compositions having different glass transition temperatures; and
a constraining layer laminated on the resin layer.

2. The vibration-damping sheet according to Claim 1, wherein each of the resin compositions has a glass transition temperature of 20 to 180°C.

3. The vibration-damping sheet according to Claim 1, wherein each of the resin compositions has a glass transition temperature of 60 to 180°C.

4. The vibration-damping sheet according to Claim 1, wherein at least one of the resin compositions contains a thermosetting resin.

5. The vibration-damping sheet according to Claim 1, wherein at least one of the resin compositions contains a thermoplastic resin.

6. The vibration-damping sheet according to Claim 1,
wherein the resin layer comprises a plurality of monolayer resin layers that are laminated, and
the resin compositions that form the respective monolayer resin layers have glass transition temperatures that are different from each other.

7. The vibration-damping sheet according to Claim 1,
wherein the resin layer includes at least one monolayer resin layer,
the monolayer resin layer has a two-phase structure formed from a continuous phase and a dispersed phase dispersed in the continuous phase, and
the glass transition temperature of the resin composition that forms the continuous phase and the glass transition temperature of the resin composition that forms the dispersed phase are different from each other.

8. A method for damping vibration of a vibrating member, the method comprising:
bonding a vibration-damping sheet to a vibrating member,
wherein the vibration-damping sheet comprises a resin layer formed from a plurality of resin compositions having different glass transition temperatures, and
a constraining layer laminated on the resin layer.

9. A method for using a vibrating member,
wherein the vibrating member to which a vibration-damping sheet is bonded is used in the range of 30 to 180°C,
the vibration-damping sheet comprising a resin layer formed from a plurality of resin compositions having different glass transition temperatures, and
the constraining layer laminated on the resin layer.

10. A method for using a vibrating member,
wherein the vibrating member to which a vibration-damping sheet is bonded is used in the range of 60 to 180°C, and
the vibration-damping sheet comprising a resin layer formed from a plurality of resin compositions having different glass transition temperatures, and
the constraining layer laminated on the resin layer.
